# FASCICULE DE BREVET EUROPEEN

(11) **EP 1 947 927 B1**
(45) Date de publication et mention de la délivrance du brevet: **31.12.2008**
(21) Numéro de dépôt: 06807141.4
(22) Date de dépôt: 11.10.2006
(51) Int. Cl.: A01K 11/00

(54) **ETIQUETTE AURICULAIRE POUR L'IDENTIFICATION D'UN ANIMAL, COMPORTANT UN ELEMENT DEFORMABLE DE RECEPTION D'UN DOIGT**
OHRMARKE ZUR KENNZEICHNUNG EINES TIERS MIT EINEM VERFORMBAREN ELEMENT ZUR AUFNAHME EINES FINGERS
EAR TAG FOR IDENTIFYING AN ANIMAL COMPRISING A DEFORMABLE ELEMENT FOR RECEIVING A FINGER

(30) Priorité: 13.10.2005 FR 0510448
(43) Date de publication de la demande: 30.07.2008
(73) Titulaire: Allflex Europe SAS, 35502 Vitre Cedex (FR)
(72) Inventeur: COSTANTINI, Anne, 35130 La Guerche de Bretagne (FR); HILPERT, Jean-Jacques, 35500 Vitre (FR)
(74) Mandataire: Ravina, Bernard
(86) Numéro de dépôt international: PCT/EP2006/067264
(87) Numéro de publication internationale: WO 2007/042528

(56) Documents cités:
- WO-A-20/06021855
- AU-B2- 568 399
- FR-A- 2 845 564
- US-A- 6 021 592
- US-A1- 2003 000 119
- US-B1- 6 666 170

## Description

### Domaine technique de l'invention.

La présente invention est du domaine du marquage et de l'identification des animaux, et plus particulièrement des étiquettes auriculaires pour le bétail. Elle a pour objet une telle étiquette auriculaire comportant un élément, tel qu'un bouton ou analogue, de réception d'un doigt par emboîtement irréversible, pour la mise en place de l'étiquette sur l'animal.

### Etat de la technique.

Les étiquettes auriculaires pour l'identification et le marquage des animaux sont destinées à permettre la traçabilité des animaux depuis leur naissance jusqu'à l'abattage. De telles étiquettes associent couramment un bouton de réception par emboîtement irréversible d'un doigt. Une platine du doigt et le bouton sont destinés à être placés de part et d'autre de l'oreille d'un animal. Le doigt est muni d'un poinçon qui traverse l'oreille pour se loger dans une cavité ménagée dans le bouton. De telles étiquettes sont porteuses de plaquettes marquées identifiant l'animal. Accessoirement, ces étiquettes sont en outre susceptibles d'être équipées de moyens électroniques d'identification, tel qu'un transpondeur ou analogue, logé à l'intérieur du bouton.

Le bouton est plus particulièrement équipé d'une tête à l'intérieur de laquelle est ménagée la cavité destinée à recevoir le poinçon du doigt. Cette tête est portée par une première coque avec laquelle elle forme une pièce unitaire, qui est rapportée par soudage, par surmoulage ou analogue, sur une deuxième coque pourvue d'un passage du poinçon vers la cavité. Des moyens à déformation élastique sont interposés entre le bouton et le doigt, pour permettre l'introduction du poinçon à l'intérieur du bouton et interdire ensuite son retrait. Par exemple, ces moyens sont constitués par un agencement radialement déformable du doigt et de la cavité qui le reçoit. Par ailleurs, le doigt comporte un épaulement de prise d'appui contre un épaulement antagoniste de la deuxième coque. Par exemple encore, ces moyens sont constitués d'un organe élastique de type ressort radialement déformable rapporté à l'intérieur du bouton, cet organe déformable autorisant le passage du poinçon et interdisant ensuite son retrait par mise en butée axiale. On pourra par exemple se reporter au document FR2845564 (ALLFLEX EUROPE) qui décrit un tel bouton auriculaire.

Un problème posé réside dans le passage difficile du poinçon à l'intérieur du bouton lors de la mise en place du doigt, nonobstant la déformabilité des moyens élastiques. La difficulté de ce passage résulte du caractère irréversible de l'emboîtement du doigt dans le bouton, qu'il est impératif d'obtenir pour garantir une inviolabilité de l'identification de l'animal. Il en résulte finalement une mise en place de l'étiquette sur l'animal qui s'avère difficile et délicate à accomplir. De surcroît, les étiquettes auriculaires sont susceptibles d'être placées dans un environnement à faible température ambiante, avec pour conséquence d'altérer la faculté de déformation des moyens élastiques. Par ailleurs, il est recherché des étiquettes auriculaires dont la structure soit la plus simple possible et dont la fabrication soit aisée pour en réduire les coûts d'obtention et les rendre compétitives. Néanmoins, cette simplification de structure ne doit pas porter atteinte à la qualité de liaison irréversible entre le doigt et le bouton.

### Objet de l'invention.

Le but de la présente invention est de proposer une étiquette auriculaire pour l'identification et le marquage des animaux, du genre comprenant un bouton de réception d'un doigt par emboîtement irréversible, dont la mise en place sur l'animal soit aisée et rapide, sans porter atteinte à la qualité et à la fiabilité de la liaison irréversible entre le doigt et le bouton. Il est aussi visé par la présente invention de proposer une telle étiquette auriculaire dont la structure soit simple et dont la fabrication soit aisée.

L'étiquette auriculaire de la présente invention est destinée à l'identification et au marquage des animaux. Cette étiquette associe principalement un bouton de réception par emboîtement irréversible d'un doigt. Ce bouton comporte une tête à l'intérieur de laquelle est ménagée une cavité de réception axiale de l'extrémité terminale du doigt, notamment agencée en poinçon. Cette tête est solidaire d'une coque de retenue du poinçon, qui est munie d'une ouverture d'introduction du poinçon à l'intérieur du bouton vers la cavité et d'un épaulement de retenue du poinçon à l'encontre du retrait de ce dernier hors du bouton, par mise en butée d'un épaulement que comporte le poinçon contre l'épaulement de retenue. L'étiquette comporte des moyens à déformation radiale élastique pour autoriser le passage du poinçon à travers l'ouverture, lors de son introduction à l'intérieur du bouton. On comprendra par bouton tout organe femelle apte à recevoir le doigt, cet organe étant notamment conformé en corps évidé. Le bouton est susceptible d'être équipé, de manière rapportée ou de manière monobloc, d'un prolongement formant platine d'identification de l'animal.

Selon la présente invention, une telle étiquette est principalement reconnaissable en ce que la paroi axiale de la coque de retenue délimitant ladite ouverture est radialement déformable. Ces dispositions sont telles que lesdits moyens à déformation radiale élastique équipant l'étiquette de l'invention sont constitués par la faculté de ladite paroi axiale à se déformer radialement. Pour faciliter l'introduction du poinçon à l'intérieur du bouton, et plus particulièrement son passage à travers l'ouverture de la coque de retenue, au moins une chambre est ménagée entre la tête et ladite paroi axiale. Cette chambre constitue une réserve de réception de la paroi axiale de la coque de retenue lorsqu'elle est déformée sous l'effet du passage du poinçon à travers ladite ouverture. Le retour en position initiale de la paroi axiale de la coque de retenue interdit un retrait du poinçon hors du bouton, par mise en butée de ce dernier contre la face de bout de ladite paroi axiale, qui forme notamment ledit épaulement de retenue contre lequel prend appui l'épaulement du poinçon.

La tête est préférentiellement réalisée à partir d'un matériau dur, pour être résistante et indéformable. Ce matériau est notamment un matériau plastique, tel que polyamide ou analogue.

La chambre est de préférence radialement subdivisée en une pluralité de chambres élémentaires, notamment séparées l'une de l'autre par des cloisons radiales susceptibles de constituer en outre et avantageusement des organes de centrage de la tête sur la coque de retenue.

Selon une forme préférée de réalisation, la tête est solidarisée à la coque de retenue par l'intermédiaire d'une coque de liaison solidaire de l'une et l'autre de la coque de retenue et de la tête.

Plus particulièrement, le bouton est composé de trois éléments, à savoir la tête, la coque de retenue et la coque de liaison. Pour permettre la formation aisée de la chambre malgré son confinement entre la tête et la coque de retenue, il est proposé de fabriquer distinctement ces éléments en réservant un espace entre leur paroi axiale respective destiné à former la chambre, puis de les lier l'un à l'autre au moyen de la coque de liaison. Cette dernière est notamment rapportée par moulage conjointement sur la tête et sur la coque de retenue.

De préférence, la tête comporte une paroi périphérique pleine interposée entre la coque de liaison et ladite chambre, pour préserver cette dernière d'une intrusion de la matière constitutive de la coque de liaison lors de l'opération de moulage de cette dernière. On notera que le confinement éventuel de la chambre résulte notamment de la présence de la paroi périphérique que comporte la tête.

La coque de retenue comporte préférentiellement des organes de centrage de la tête, pour le positionnement de cette dernière lors de l'opération de moulage de la coque de liaison. Ces organes de centrage sont par exemple constitués d'ergots ménagés à la périphérie extérieure de ladite paroi axiale de la coque de retenue. Tel que visé plus haut, ces ergots forment notamment des entretoises de positionnement de la tête par rapport à la paroi axiale de la coque de retenue, ces entretoises permettant de ménager ladite chambre et formant des cloisons de séparation entre les dites chambres élémentaires.

La chambre est notamment ménagée entre la paroi périphérique pleine de la tête et ladite paroi axiale de la coque de retenue.

Selon diverses variantes de réalisation permettant la déformation élastique de la paroi axiale de la coque de retenue, soit cette dernière est continue, sa matière constitutive étant une matière plastique élastiquement déformable tel que le polyuréthane, soit la paroi axiale de la coque de retenue est discontinue, en étant notamment composée d'ailettes radialement déformables.

Selon une forme préférée de réalisation, la coque de retenue est formée d'une masse cohésive souple, dont la déformabilité globale d'une part permet la déformation radiale de ladite paroi axiale, et d'autre part conforte l'interdiction de retrait du doigt par déformation axiale de la paroi axiale. Il en ressort que la déformation de l'élément femelle de réception du doigt en est favorisée lors de l'introduction de ce dernier à l'intérieur de la cavité que le bouton comporte à cet effet.

Accessoirement, l'étiquette est équipée de moyens électroniques d'identification, tel qu'un transpondeur ou analogue, qui sont notamment logés dans le bouton.

### Description des figures.

La présente invention sera mieux comprise, et des détails en relevant apparaîtront, à la lecture de la description qui va en être faite d'une forme préférée de réalisation en relation avec les figures des planches annexées, dans lesquelles :
Les fig.1 à fig.3 sont des vues schématiques en coupe d'une étiquette auriculaire selon l'invention illustrant successivement les étapes principales d'assemblage d'un doigt avec un bouton que comporte cette étiquette.
Les fig.4 et fig.5 sont des vues schématiques respectivement de dessus et en perspective d'une coque inférieure participante du bouton illustré sur les figures précédentes.
Les fig.6 et fig.7 sont des vues schématiques respectivement de dessus et en perspective d'un bouton illustré sur les fig.1 à fig.3.

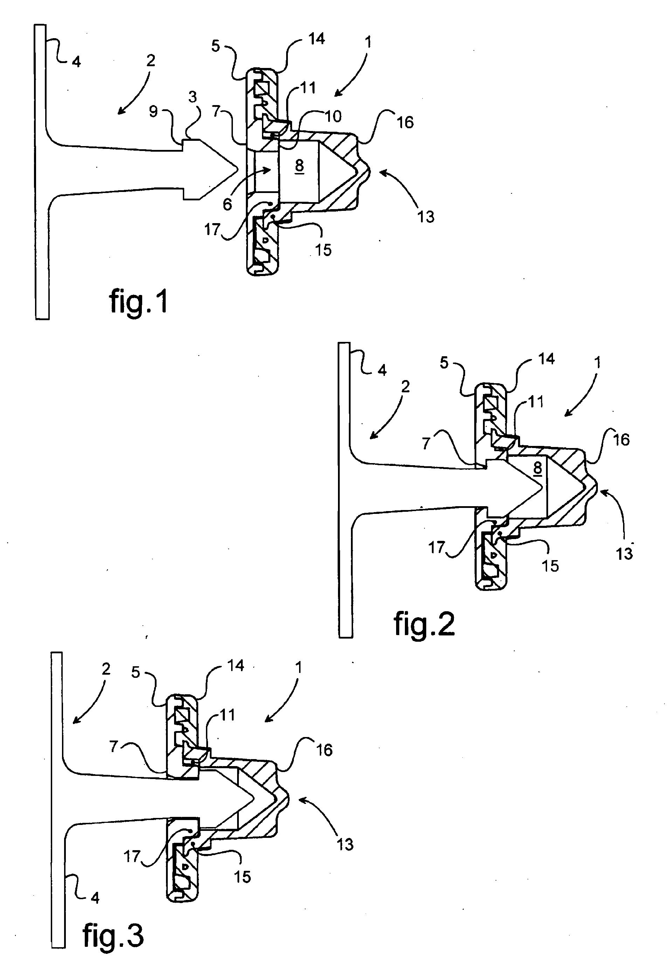

Sur les fig.1 à fig.3, une étiquette auriculaire est destinée à l'identification et au marquage d'un animal, à partir de sa mise en place sur une oreille de ce dernier. Cette étiquette associe un bouton 1 et un doigt 2 qui sont destinés à être assemblés entre eux par emboîtement irréversible. Le doigt 2 comporte à l'une de ses extrémités un poinçon 3 et à l'autre de ses extrémités une platine 4 destinée à prendre appui contre une face de l'oreille de l'animal. De préférence, le doigt 2 est réalisé par moulage d'un matériau plastique plus ou moins souple. Selon une variante de réalisation du doigt 2, celui-ci est susceptible d'être formé à partir d'un matériau plastique dur, tel qu'un polyamide ou analogue. Le bouton 1 est quant à lui destiné à être placé à l'autre face de l'oreille de l'animal, en prenant appui contre celle-ci par l'intermédiaire de la base d'une coque de retenue 5 du poinçon 3 à l'intérieur du bouton 1. On notera que selon une variante de réalisation non représentée, ce bouton 1 est susceptible de comporter une platine offrant une surface de marquage pour l'identification de l'animal.

Lors de la mise en place de l'étiquette auriculaire sur l'animal par un opérateur, le bouton 1 et le doigt 2 sont respectivement placés de part et d'autre de l'oreille de l'animal, tel qu'illustré sur la fig. 1. Le poinçon 3 traverse l'oreille de l'animal, puis pénètre à travers une ouverture 6 ménagée dans la coque de retenue 5, tel qu'illustré sur la fig.2. Pour faciliter l'introduction du poinçon 3 à travers l'ouverture 6, celui-ci est conformé en cône. L'ouverture 6 est délimitée par une paroi axiale 7 de la coque de retenue 5, qui forme un passage vers une cavité 8 de réception du poinçon 3. Lorsque la mise en place de l'étiquette est effectuée, le poinçon 3 est logé dans la cavité 8 du bouton 1, tel qu'illustré sur la fig.3. Pour interdire un retrait du poinçon 3 hors de la cavité 8, ce dernier 3 comporte un épaulement 9 de mise en butée axiale contre un épaulement de retenue 10 que comporte la coque de retenue 5.

La coque de retenue 5 est réalisée à partir d'un matériau plastique souple, tel qu'un polyuréthane ou analogue, pour être déformable. Ces dispositions visent à permettre un élargissement de l'ouverture 6 à partir d'une déformation radiale de la paroi axiale 7, sous l'effet du passage du poinçon 3 à travers la coque de retenue 5 lors de l'introduction du doigt 2. Pour faciliter cette déformation, le bouton 1 comporte une chambre 11 de réception de la paroi axiale 7 déformée sous l'effet du passage du poinçon 3 à travers l'ouverture 6. Cette chambre 11 jouxte la paroi axiale 7 et s'étend circulairement autour de cette dernière 7. De préférence, cette chambre 11 est radialement subdivisée en une pluralité de segments cylindriques formant des chambres élémentaires respectives. Après l'introduction du poinçon 3 dans la cavité 8, la paroi axiale 7 reprend sa conformation initiale naturelle.

Le bouton 1 est formé à partir de l'assemblage entre elles de la coque de retenue 5 et d'une tête 13, par intermédiaire d'une coque de liaison 14. La tête 13 comporte une paroi périphérique pleine 15 enveloppée à sa base par la coque de liaison 14. La paroi périphérique 15 est rehaussée d'un chapeau 16 qui loge la cavité 8 de réception du poinçon 3. Pour contenir efficacement le poinçon rigide 3, la tête 13 est préférentiellement réalisée à partir d'un matériau dur, tel qu'un matériau métallique ou un matériau plastique dur, tel qu'un polyamide ou analogue. La coque de liaison 14 est quant à elle de préférence réalisée à partir d'un matériau plastique souple déformable, tel qu'un polyuréthane. La coque de liaison 14 est rapportée par moulage sur la coque de retenue 5 et sur la paroi périphérique pleine 15 de la tête 13, en ménageant un espace entre elles destiné à constituer la chambre de réception 11 de la paroi axiale 7. La paroi périphérique 15 constitue un obstacle à l'intrusion de la matière constitutive de la coque de liaison 14, lors de son apport par moulage.

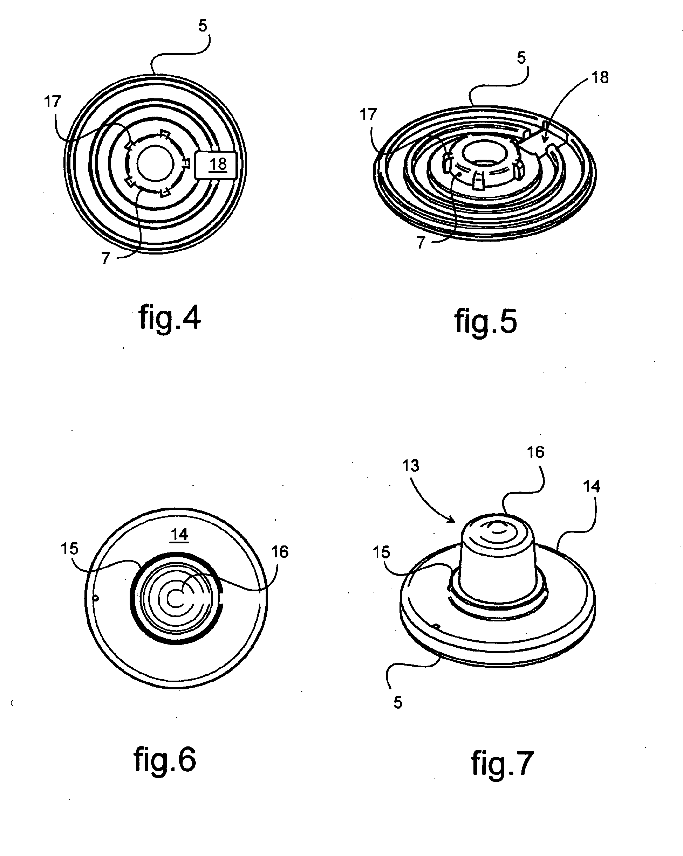

Sur les fig.4 et fig.5, la face externe de la paroi axiale 7 est munie d'ergots de centrage 17 de la tête 13 contre lesquels ergots 17 prend appui la paroi périphérique 15 de cette dernière 13. Ces ergots 17 constituent des entretoises entre la paroi axiale 7 et la paroi périphérique 15, pour ménager entre elles les chambres élémentaires radiales qui composent la chambre 11.

La coque de retenue 5 comporte un évidement 18 destiné à recevoir un moyen électronique d'identification de l'animal, tel qu'un transpondeur ou analogue.

## Revendications

1. Etiquette auriculaire pour l'identification et le marquage des animaux, cette étiquette associant principalement un bouton (1) de réception par emboîtement irréversible d'un doigt (2), ce bouton (1) comportant une tête (13) à l'intérieur de laquelle est ménagée une cavité (8) de réception axiale d'un poinçon (3) du doigt (2), cette tête (13) étant solidaire d'une coque de retenue (5) du poinçon (3), qui est munie d'une ouverture (6) d'introduction du poinçon (3) à l'intérieur du bouton (1) vers la cavité (8), et d'un épaulement de retenue (10) du poinçon (3) à l'encontre du retrait de ce dernier (3) hors du bouton (1), par mise en butée d'un épaulement (9) que comporte le poinçon (3) contre l'épaulement de retenue (10), l'étiquette comportant des moyens (7) à déformation radiale élastique pour autoriser le passage du poinçon (3) à travers l'ouverture (6), **caractérisée en ce que** la paroi axiale (7) de la coque de retenue (5) délimitant ladite ouverture (6) est radialement déformable pour constituer lesdits moyens à déformation radiale élastique, et **en ce qu'**au moins une chambre (11) est ménagée entre la tête (13) et ladite paroi axiale (7) pour la réception de cette dernière (7) déformée sous l'effet du passage du poinçon (3) à travers ladite ouverture (6).

2. Etiquette auriculaire selon la revendication 1, **caractérisée en ce que** la chambre (11) est radialement subdivisée en une pluralité de chambres élémentaires.

3. Etiquette auriculaire selon l'une quelconque des revendications précédentes, **caractérisée en ce que** la tête (13) est solidarisée à la coque de retenue (5) par l'intermédiaire d'une coque de liaison (14) solidaire de l'une et l'autre de la coque de retenue (5) et de la tête (13).

4. Etiquette auriculaire selon la revendication 3, **caractérisée en ce que** la coque de liaison (14) est rapportée par moulage conjointement sur la tête (13) et sur la coque de retenue (5).

5. Etiquette auriculaire selon la revendication 4, **caractérisée en ce que** la tête (13) comporte une paroi périphérique pleine (15) interposée entre la coque de liaison (14) et ladite chambre (11), pour préserver cette dernière (11) d'une intrusion de la matière constitutive de la coque de liaison (14) lors de l'opération de moulage de cette dernière (14).

6. Etiquette auriculaire selon l'une quelconque des revendications 4 et 5, **caractérisée en ce que** la coque de retenue (5) comporte des organes de centrage (17) de la tête (13).

7. Etiquette auriculaire selon les revendications 2 et 6, **caractérisée en ce que** les chambres élémentaires sont séparées l'une de l'autre par des cloisons radiales constituant en outre lesdits organes de centrage (17).

8. Etiquette auriculaire selon l'une quelconque des revendications 6 et 7, **caractérisée en ce que** lesdits organes de centrage (17) sont constitués d'ergots ménagés à la périphérie extérieure de ladite paroi axiale (7) de la coque de retenue (5), qui constituent des entretoises entre la paroi axiale (7) et la paroi périphérique (15), ménageant entre elles ladite chambre (11).

9. Etiquette auriculaire selon la revendication 5, **caractérisée en ce que** la chambre (11) est ménagée entre la paroi périphérique pleine (15) de la tête (13) et ladite paroi axiale (7) de la coque de retenue (5).

10. Etiquette auriculaire selon l'une quelconque des revendications précédentes, **caractérisée en ce que** ladite paroi axiale (7) de la coque de retenue (5) étant continue, sa matière constitutive est une matière plastique élastiquement déformable.

11. Etiquettes auriculaire selon l'une quelconque des revendications précédentes, **caractérisée en ce qu'**elle est équipée de moyens électroniques d'identification.

12. Etiquettes auriculaire selon l'une quelconque des revendications précédentes, **caractérisée en ce que** la tête (13) est réalisée en matériau dur.

## Claims

1. Ear tag for the identification and the tagging of animals, whereby this tag primarily combines a receiving button (1) by irreversible interlocking of a pin (2), whereby this button (1) comprises a head (13) inside of which is located a cavity (8) for axial accommodation of a punch (3) of the pin (2), whereby this head (13) is integral with a shell (5) for holding the punch (3), which is equipped with an opening (6) for inserting the punch (3) inside the button (1) toward the cavity (8), and a shoulder (10) for holding the punch (3) against the withdrawal of the latter (3) outside of the button (1), by stopping a shoulder (9) that the punch (3) comprises against the holding shoulder (10), whereby the tag comprises elastic radial deformation means (7) for allowing the passage of the punch (3) through the opening (6), **characterized in that** the axial wall (7) of the holding shell (5) that delimits said opening (6) is radially deformable to constitute said elastic radial deformation means and **in that** at least one chamber (11) is located between the head (13) and said axial wall (7) for the accommodation of the latter (7) that is deformed under the action of the passage of the punch (3) through said opening (6).

2. Ear tag according to claim 1, wherein the chamber (11) is radially subdivided into a number of basic chambers.

3. Ear tag according to any of the preceding claims, wherein the head (13) is made integral with the holding shell (5) by means of a connecting shell (14) that is integral with both the holding shell (5) and the head (13).

4. Ear tag according to claim 3, wherein the connecting shell (14) is inserted by molding jointly on the head (13) and on the holding shell (5).

5. Ear tag according to claim 4, wherein the head (13) comprises a full peripheral wall (15) that is inserted between the connecting shell (14) and said chamber (11) to protect the latter (11) against intrusion of the constituent material of the connecting shell (14) during the molding operation of the latter (14).

6. Ear tag according to any of claims 4 and 5, wherein the holding shell (5) comprises elements (17) for centering the head (13).

7. Ear tag according to claim 2 and 6, wherein the basic chambers are separated from one another by radial partitions that also constitute said centering elements (17).

8. Ear tag according to any of claims 6 and 7, wherein said centering elements (17) consist of lugs located on the outside periphery of said axial wall (7) of the holding shell (5), which constitute crosspieces between the axial wall (7) and the peripheral wall (15), locating said chamber (11) between them.

9. Ear tag according to claim 5, wherein the chamber (11) is located between the full peripheral wall (15) of the head (13) and said axial wall (7) of the holding shell (5).

10. Ear tag according to any of the preceding claims, wherein said axial wall (7) of the holding shell (5) is continuous, and its constituent material is an elastically deformable plastic material.

11. Ear tags according to any of the preceding claims, wherein it is equipped with electronic identification means.

12. Ear tags according to any of the preceding claims, wherein the head (13) is made of hard material.

## Patentansprüche

1. Ohrmarke zur Kennzeichnung und Markierung von Tieren, wobei diese Marke hauptsächlich aus einem Knopf (1) zur Aufnahme eines Zapfens (2) durch irreversibles Einrasten besteht, wobei der Knopf (1) einen Kopfteil (13) aufweist, innerhalb dessen ein Hohlraum (8) zur axialen Aufnahme eines Dorns (3) des Zapfens (2) vorgesehen ist, wobei dieser Kopfteil (13) fest mit einer Schale (5) zum Festhalten des Dorns (3) verbunden ist, welche mit einer Öffnung (6) zum Einführen des Dorns (3) in Richtung des Hohlraums (8) innerhalb des Knopfes (1) sowie mit einem Ansatz (10) versehen ist, wobei letzterer zum Festhalten des Dorns (3) dient, wenn dieser (3) aus dem Knopf (1) gezogen werden soll, wobei der Ansatz (9), mit welchem der Dorn (3) versehen ist, gegen den Halteansatz (10) stößt, wobei die Marke Mittel (7) zur elastischen radialen Verformung aufweist, welche das Eindringen den Dorns (3) durch die Öffnung (6) ermöglichen, **dadurch gekennzeichnet, dass** die axiale Wand (7) der Halteschale (5), welche die Öffnung (6) begrenzt, radial verformbar ist und auf diese Weise die Mittel zur radialen elastischen Verformung bildet und dass mindestens eine Kammer (11) zwischen dem Kopfteil (13) und der axialen Wand (7) vorgesehen ist, wobei die Kammer der Aufnahme der letzteren (7) dient, wenn diese durch das Eindringen des Dorns (3) durch die Öffnung (6) verformt wird.

2. Ohrmarke nach Anspruch 1, **dadurch gekennzeichnet, dass** die Kammer (11) radial in mehrere Einzelkammern unterteilt ist.

3. Ohrmarke nach einem beliebigen der vorhergehenden Ansprüche, **dadurch gekennzeichnet, dass** die Verbindung zwischen Kopfteil (13) und der Halteschale (5) über eine Verbindungsschale (14) hergestellt wird, die sowohl mit den Halteschale (5) als auch mit dem Kopfteil (13) fest verbunden ist.

4. Ohrmarke nach Anspruch 3, **dadurch gekennzeichnet, dass** die Verbindungsschale (14) durch ein Formgebungsverfahren hergestellt wird, wobei der Kopfteil (13) und die Halteschale (5) gleichzeitig als formgebende Elemente dienen.

5. Ohrmarke nach Anspruch 4, **dadurch gekennzeichnet, dass** der Kopfteil (13) zwischen der Verbindungsschale (14) und der Kammer (11) eine als Vollkörper ausgebildete umlaufende Außenwand (15) aufweist, um zu verhindern, dass die Materie, aus welcher die Verbindungsschale (14) besteht, bei der Formung der letzteren (14) in die Kammer (11) eindringt.

6. Ohrmarke nach einem beliebigen der Ansprüche 4 und 5, **dadurch gekennzeichnet, dass** die Halteschale (5) Elemente (17) zum Zentrieren des Kopfteils (13) aufweist.

7. Ohrmarke nach den Ansprüchen 2 und 6, **dadurch gekennzeichnet, dass** die Einzelkammern voneinander durch radiale Scheidewände getrennt werden, welche darüber hinaus die Zentrierelemente (17) bilden.

8. Ohrmarke nach einem beliebigen der Ansprüche 6 und 7, **dadurch gekennzeichnet, dass** die Zentrierelemente (17) aus Stiften bestehen, die am äußeren Rand der axialen Wand (7) der Halteschale (5) angeordnet sind und Querverstrebungen zwischen der axialen Wand (7) und der umlaufenden Außenwand (15) darstellen, zwischen denen sich die Kammer (11) befindet.

9. Ohrmarke nach Anspruch 5, **dadurch gekennzeichnet, dass** die Kammer (11) zwischen der als Vollkörper ausgebildeten umlaufenden Außenwand (15) des Kopfteils (13) und der axialen Wand (7) der Halteschale (5) vorgesehen ist.

10. Ohrmarke nach einem beliebigen der vorhergehenden Ansprüche, **dadurch gekennzeichnet, dass** die axiale Wand (7) der Halteschale (5) durchgehend ist und aus einem elastisch verformbaren Kunststoff besteht.

11. Ohrmarke nach einem beliebigen der vorhergehenden Ansprüche, **dadurch gekennzeichnet, dass** sie mit elektronischen Kennzeichnungsmitteln ausgestattet ist.

12. Ohrmarke nach einem beliebigen der vorhergehenden Ansprüche, **dadurch gekennzeichnet, dass** der Kopfteil (13) aus einem harten Werkstoff hergestellt ist.
